Europäisches Patentamt

**European Patent Office**

Office européen des brevets

(11) Numéro de publication: **0 028 582**
**A1**

(12) # DEMANDE DE BREVET EUROPEEN

(21) Numéro de dépôt: **80810322.0**

(51) Int. Cl.³: **F 16 T 1/00**

(22) Date de dépôt: **27.10.80**

(30) Priorité: **01.11.79 YU 2670/79**

(43) Date de publication de la demande:
**13.05.81 Bulletin 81/19**

(84) Etats Contractants Désignés:
**AT BE CH DE FR GB IT LI LU NL SE**

(71) Demandeur: **Vicentic, Ratomir**
**Kralja Milutina 33**
**Belgrade(YU)**

(71) Demandeur: **Vicentic, Ninoslav**
**13, rue de la Madeleine**
**CH-1204 Genève(CH)**

(71) Demandeur: **Dabic, Djordje**
**Brace Jerkovic 74**
**Belgrade(YU)**

(71) Demandeur: **Juricic, Stevan**
**Medakoviceva 117**
**Belgrade(YU)**

(72) Inventeur: **Vicentic, Ratomir**
**Kralja Milutina 33**
**Belgrade(YU)**

(72) Inventeur: **Vicentic, Ninoslav**
**13, rue de la Madeleine**
**CH-1204 Genève(CH)**

(72) Inventeur: **Dabic, Djordje**
**Brace Jerkovic 74**
**Belgrade(YU)**

(72) Inventeur: **Juricic, Stevan**
**Medakoviceva 117**
**Belgrade(YU)**

(74) Mandataire: **Moinas, Michel**
**c/o MOINAS & CIE Case Postale 88**
**CH-1211 Genève 4(CH)**

(54) **Séparateur de condensat.**

(57) Le séparateur de condensat comprend un réservoir (1) muni d'un régulateur de niveau (2) avec alarme, d'une vanne de vidande (14), d'un contrôleur de niveau (4) et d'une soupape de sécurité (6). Ce réservoir (1) est alimenté en vapeur et condensat par l'intermédiaire d'une vanne (5) à passage direct.

Le circuit de sortie du condensat comprend une vanne à appoint d'énergie (3) électro-magnétique, pneumatique ou électromotorisée, asservie au régulateur (2), précédée d' d'une vanne (7) à passage directe et d'un filtre (8) et suivie d'une vanne (9) à passage directe.

Un circuit de contournement, disposé en parallèle, comprend une vanne (10) à passage direct, un filtre (11), un clapet anti-retour (12) et une vanne (13) à passage direct.

./...

Croydon Printing Company Ltd.

Figure 1

## SEPARATEUR DE CONDENSAT

Pratiquement toutes les industries qui utilisent la vapeur comme fluide chauffant, soit pour assurer des conditions de travail (chauffage des pièces), soit pour le déroulement des processus technologiques, sont confrontées avec le problème toujours présent de la condensation de la vapeur et du retour du condensat dans la chaudière. Ce phénomène est dû au fonctionnement incertain des séparateurs de condensat actuels qu'il s'agisse des séparations thermo-dynamiques ou des purgeurs, car ceux-ci ont réalisés pour fonctionner sans énergie d'appoint.

Jusqu'à présent, par leur construction inappropriée, les séparateurs de condensat laissaient partir la vapeur aussi dans le circuit de condensation, avant que celle-ci ait transmise, à un organe consommateur de chaleur toute sa chaleur latente, ce qui avait pour conséquence des grandes pertes de l'énergie thermique ainsi que des pertes de condensat à cause de l'évaporation.

La pose des séparateurs de condensat derrière chaque organe consommateur n'a fait qu'augmenter le nombre d'endroits où se perdent l'énergie thermique et le condensat, de même que la maintenance devenait chère et très souvent inefficace.

Le séparateur de condensat exposé ci-après, évite les défauts cités ci-dessus en ne laissant passer dans le circuit de condensation que le condensat (c. à d. la phase liquide de la vapeur).

La vapeur transmet ainsi toute sa chaleur latente à l'organe consommateur de chaleur.

Ce séparateur comprend un réservoir, de préférence cylindrique, muni d'un régulateur de niveau, de préférence électrique, avec alarme, d'une vanne de vidange, avantageusement d'un contrôleur de niveau visuel et d'une soupape de securité. Le circuit d'entrée de la vapeur et du condensat, relié aux organes consommateurs de chaleur, est muni d'une vanne à passage direct. Sur le circuit de sortie du condensat, on trouve, asservie au régulateur de niveau, d'une part une vanne à énergie d'appoint précédée successivement d'une vanne à passage direct et d'un filtre contre les impuretés et suivie d'une vanne à passage direct, et d'autre-part, sur un circuit de contournement disposé en parallèle, successivement une vanne à passage direct, un filtre contre les impuretés, un clapet anti-retour et une vanne à passage direct.

La vanne à énergie d'appoint arrête l'écoulement du condensat lorsque son niveau dans le réservoir atteint le niveau minimum prévu et permet l'écoulement de celui-ci quand son niveau atteint le niveau maximum prévu.

Cette vanne à énergie d'appoint peut-être aussi bien électro-magnétique que pneumatique ou électromotorisée.

Les figures qui suivent, données à titre d'exemples, illustrent l'invention.

La figure 1 est une vue en coupe longitudinale du séparateur de condensat du type électro-magnétique, où la vanne à appoint d'énergie est électro-magnétique.

La figure 2 est une vue en coupe longitudinale du séparateur de condensat du type pneumatique, où la vanne à appoint d'énergie est pneumatique.

La figure 3 est une vue en coupe longitudinale du séparateur de condensat du type électromotorisé, où la vanne à appoint d'énergie est électromotorisée.

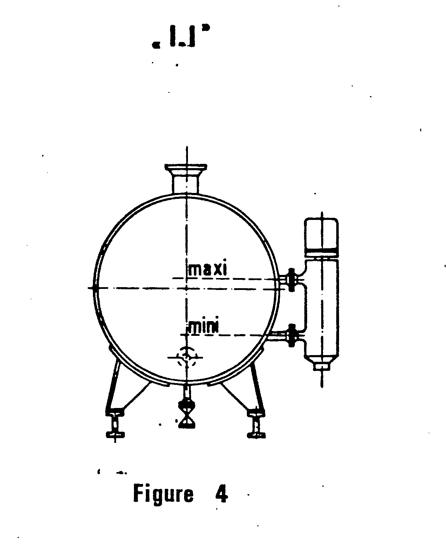

La figure 4 est une vue en coupe transversale du séparateur selon l'une quelconque des figures précédentes.

En références à ces figures, on a représenté un réservoir 1 cylindrique, à fonds bombés, conçu pour des pressions de 16, 25 ou 40 bars. Le régulateur de niveau 2, électrique, est équipé de trois interrupteurs magnétique : un pour le niveau minimum, un autre pour le niveau maximum et un troisième, situé au dessus de celui pour le niveau maximum et branché sur une alarme (installation de signalisation sonore ou lumineuse).

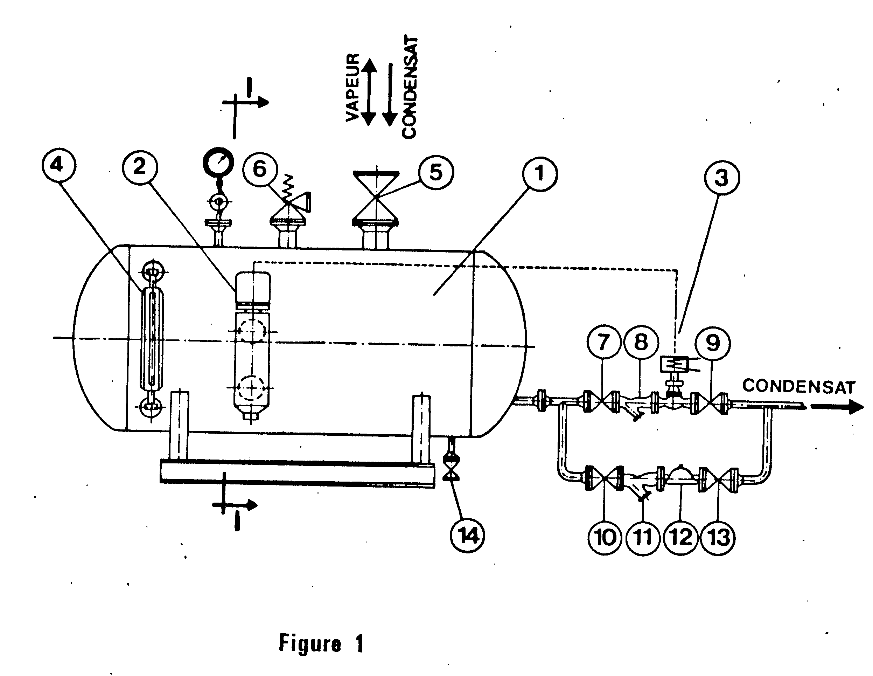

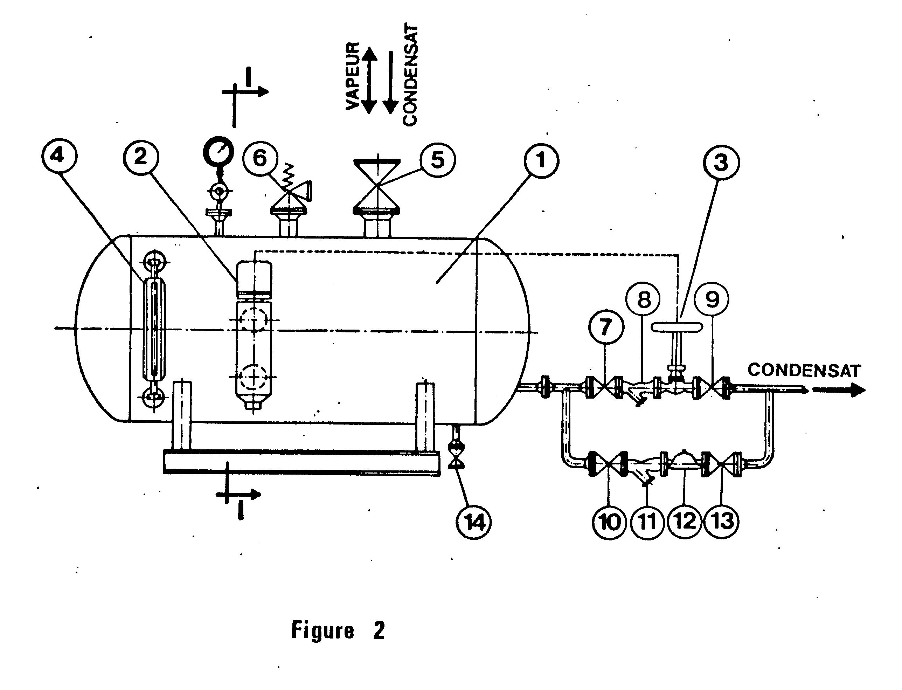

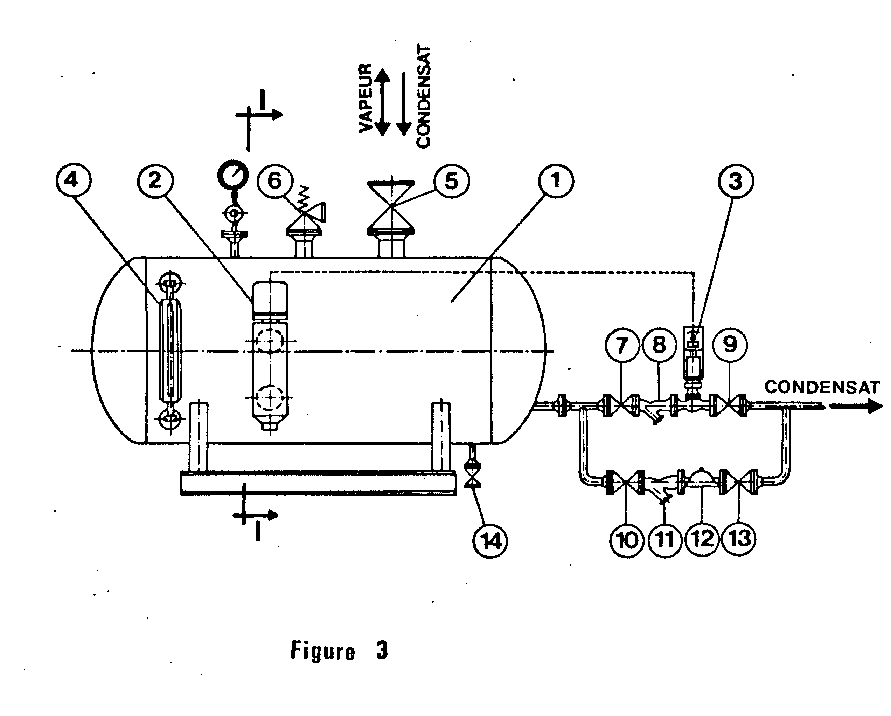

La vanne à énergie d'appoint 3, électro-mécanique dans la figure 1, pneumatique dans la figure 2 et électromotorisée dans le figure 3, reçoit du régulateur de niveau 2 l'impulsion destinée à arrêter l'écoulement du condensat lorsque son niveau dans le réservoir cylindrique 1 atteint le niveau mimimum prévu ou à permettre l'écoulement du condensat quand son niveau dans le réservoir 1 atteint le maximum prévu. Le réglage des niveaux minimum et maximum est fait en fonction du temps nécessaire à la vanne 3 pour permettre ou arrêter l'écoulement du condensat et de la quantité de celui-ci.

Sont représentés également : un contrôleur visuel de niveau 4, une vanne 5 à passage direct sur laquelle sont branchés des organes consommateurs de chaleur, une soupape de sécurité 6, une vanne 7 à passage direct, un filtre 8 contre les impuretés, une vanne 9 à passage direct, et sur le circuit de contournement une vanne 10 à passage direct, un filtre 11 contre les impurétés, un clapet anti-retour 12 et une vanne 13 à passage direct. Une vanne de vidange 14 est disposée sur le réservoir 1.

Le séparateur de condensat fonctionne suivant le principe que l'écoulement du condensat à travers le circuit de sortie ou de condensation est régularisé par une vanne 3 à énergie d'appoint. Le réservoir 1 cylindrique est relié par l'intermédiaire de la vanne 5 à tous les organes consommateurs de chaleur qui utilisent la vapeur comme fluide chauffant, de pression identique. Il est situé au dessous du niveau qu'occupent les corps chauffants dans les organes précités.

Dans le réservoir 1 se forment un espace de vapeur, à la même pression que celle des corps chauffants des organes consommateurs de chaleur, et un espace aqueux. Dans ces corps chauffants, la vapeur transmet sa chaleur latente et se liquéfie ; le condensat ainsi formé passe dans le réservoir 1. Lorsque le niveau de condensat atteint le niveau maximum, le régulateur de niveau 2 électrique envoie une impulsion à la vanne 3 qui ouvre le passage au condensat. Lorsque le niveau de condensat atteint le minimum, le régulateur 2 envoie une impulsion à la vanne 3 qui ferme le passage du condensat.

Le niveau minimum est défini de manière à être placé au dessus du conduit de sortie du condensat pour éliminer les phénomènes d'hystérésis des vannes et empêcher que la vapeur se trouvant dans le réservoir 1 puisse entrer dans le conduit de sortie du condensat.

S'il advenait que la vanne 3 ne réagisse pas aux impulsions du régulateur de niveau 2, le condensat dans le réservoir 1, en montant au dessus de niveau maximum, actionnera le troisième interrupteur magnétique, déclanchant l'alarme. Un signal sonore ou lumineux avertira alors l'opérateur qu'il est nécessaire d'ouvrir les vannes 10 et 13 du circuit de contournement. Le séparateur de condensat peut donc fonctionner en manuel, par exemple pendant le temps de réparation de l'automatique.

Sur le réservoir 1 se trouve aussi l'indispensable soupape de sécurité 6, selon les normes en vigueur pour les récipients sous pression et un contrôleur visuel de niveau 4 permet l'observation du niveau de condensat dans le réservoir 1.

Le séparateur de condensat peut être de trois types, selon la nature de la vanne 3 : électro-mécanique si la vanne 3 est électromécanique (figure 1), pneumatique si la vanne 3 est pneumatique (figure 2) et électromotorisé si la vanne 3 est électromotorisée (figure 3).

## REVENDICATIONS

1. Séparateur de condensat, caractérisé par le fait qu'il comprend :

(a) un réservoir (1) muni d'un régulateur de niveau (2) avec alarme, d'une vanne de vidange (14) et d'une soupape de sécurité (6),

sur le circuit d'entrée de la vapeur et du condensat,

(b) une vanne (5) à passage direct,

sur le circuit de sortie de condensat,

(c) une vanne à énergie d'appoint (3) précédée successivement d'une vanne (7) à passage direct et d'un filtre (8) et suivi d'une vanne (9) à passage direct, et

(d) sur un circuit de contournement disposé en parallèle, successivement une vanne (10) à passage direct, un filtre (11), un clapet anti-retour (12) et une vanne (13) à passage direct,

la vanne à énergie d'appoint (3) étant asservie au régulateur de niveau (2) de façon à arrêter l'écoulement du condensat lorsque son niveau dans le réservoir (1) atteint le niveau minimum prévu et à permettre l'écoulement du condensat quand son niveau atteint le maximun prévu.

2. Séparateur de condensat selon la revendication 1, caractérisé par le fait que la vanne à appoint d'énergie (3) est une vanne électro-magnétique.

3. Séparateur de condensat selon la revendication 1, caractérisé par le fait que la vanne à appoint d'énergie (3) est une vanne pneumatique.

4. Séparateur de condensat selon la revendication 1, caractérisé par le fait que la vanne à appoint d'énergie (3) est une vanne électromotorisée.

5. Séparateur de condensat selon la revendication 1, caractérisé par le fait qu'il comprend un contrôleur visuel de niveau (4) permettant l'observation du niveau de condensat dans le réservoir (1).

Figure 1

0028582

Figure 2

VAPEUR

CONDENSAT

CONDENSAT

-3/4-

0028582

Figure 3

„I.I"

Figure 4

0028582

**Office européen des brevets**

## RAPPORT DE RECHERCHE EUROPEENNE

Numéro de la demande

EP 80 81 0322

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | <u>DE - B - 1 042 327</u> (BALZ) <br> * Colonne 1, lignes 1-20; colonne 3, lignes 48-70; colonne 4, lignes 1-4; figures * | 1,2,3 | F 16 T 1/00 |
| | --- | | |
| | <u>US - A - 1 701 143</u> (CLARKE) <br> * En entier * | 1,5 | |
| | --- | | |
| | <u>US - A - 2 062 672</u> (MASTENBROOK) <br> * Page 1, colonne de gauche, lignes 1-29; page 2, colonne de gauche, lignes 13-70; figures * | 1 | |
| | --- | | DOMAINES TECHNIQUES RECHERCHES (Int. Cl. 3) |
| | <u>US - A - 3 572 588</u> (HAMILTON) <br> * Résumé; colonne 3, lignes 1-36; figures * | 1 | F 16 T <br> F 22 D |
| | --- | | |
| | <u>FR - A - 2 234 512</u> (FUJIWARA) <br> * Page 2, lignes 27-38; pages 3,4 et 5; figures * | 1,4 | |
| | --- | | |
| | <u>FR - A - 2 304 028</u> (REGAMEY) <br> * Page 20, lignes 23-35; figure 3 * | 1 | |
| | ------ | | CATEGORIE DES DOCUMENTS CITES |

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| La Haye | 19-01-1981 | V. GHEEL |

OEB Form 1503.1 06.78